# EUROPÄISCHE PATENTSCHRIFT

(11) **EP 0 653 330 B1**
(45) Veröffentlichungstag und Bekanntmachung des Hinweises auf die Patenterteilung: **08.05.1996**
(21) Anmeldenummer: 94116291.9
(22) Anmeldetag: 15.10.1994
(51) Int. Cl.: B60R 9/06

(54) **Vorrichtung zum Transport von Lasten an Kraftfahrzeugen mit Kugelkopfkupplung**
Load transporting device on a vehicle with a ball hitch
Dispositif de transport d'une charge pour un véhicule avec un accouplement à rotule

(30) Priorität: 29.10.1993 DE 4337006
(43) Veröffentlichungstag der Anmeldung: 17.05.1995
(73) Patentinhaber: Bussler, Paul, D-59510 Lippetal (DE)
(72) Erfinder: Bussler,Paul, D-59510 Lippetal (DE); Horstmann,Josef, D-59510 Lippetal-Hovestadt (DE)
(74) Vertreter: Schneider, Wilhelm, Dipl.-Phys.

(56) Entgegenhaltungen:
- DE-A- 3 300 439
- GB-A- 2 195 304

## Beschreibung

Gegenstand der Erfindung ist eine Vorrichtung zum Transport von Lasten auf der Rückseite von Kraftfahrzeugen, die mit einer Kugelkopfkupplung versehen sind mittlels eines horizontal gegen die Fahrtrichtung gerichteten Tragarms.

Neben der Verwendung von Dachgepäckträgern ist es bekannt, an der Rückseite von Kraftfahrzeugen dort fest angebrachte Transportmittel, zum Beispiel für Fahrräder vorzusehen. Die Verwendung solcher Transportmittel wird oft dadurch erschwert oder verhindert, daß an der Rückseite des Kraftfahrzeuges außen Reserveräder, Leitern oder Türen zum Betreten oder Beladen des Fahrzeugraum vorhanden sind. Solche Vorrichtungen sind auch für Kraftfahrzeuge mit Kugekkopfkupplungen, zum Beispiel aus der GB 21 95 304 bekannt. Diese Vorrichtung hat den Nachteil, daß sie nur sehr aufwendig mit dem Kraftfahrzeug verbunden werden kann.

Der Erfindung liegt die Aufgabe zugrunde, eine Vorrichtung der eingangs beschriebenen Art zum Transport von Lasten anzugeben, die auch dann verwendet werden kann, wenn auf der Rückseite des Fahrzeuges Hindernisse, wie Reserveräder oder dergleichen vorhanden sind und darüber hinaus die vielseitige Verwendung solcher Vorrichtungen zu ermöglichen und die eine möglichst leichte und handliche Montage erlauben.

Gegenstand der Erfindung, die die gestellte Aufgabe löst, ist eine Vorrichtung zum Transport von Lasten auf der Rückseite von Kraftfahrzeugen, die mit einer Kugelkopfkupplung vrsehen sind mittels eines horizontal gegen die Fahrtrichtung gerichteten Tragarmes. Sie besteht aus einer Stange, die mit Mitteln zu ihrer Befestigung quer zur Fahrtrichtung auf einer Kugelkopfkupplung versehen ist, wobei die Stange zwei zum Befestigungsmittel symmetrische Anschläge aufweist. und
daß ein Rohrstück in Form eine den Kugelkopf übergreifenden Kappe an den Tragarm fest angesetzt ist
und
an dem Tragarm beiderseits je eine schräg in Fahrtrichtung nach unten gerichtete Stützlasche befestigt ist, die an ihrem unteren Ende eine Ausnehmung aufweist mit der die Stützlasche formschlüssig auf der Querstange außerhalb der Anschläge aufliegt sobald der Tragarm in seiner vorgesehenen Stellung ist
und
daß in dem Tragarm in einer schräg in Fahrtrichtung nach unten gerichteten Hülse, die den Tragarm nach oben überragt, eine Spindel mit Außengewinde verläuft, die durch Betätigung eines am oberen Ende der Hülse befindlichen Handrades mit einem in das Spindelgewinde eingreifende Innengewinde longitudinal gegen die Hülse bewegt werden kann und daß die Spindel an ihrem unteren Ende ein Flachband trägt, das an seinem unteren Ende ebenfalls in Fahrtrichtung zu einem Halbkreis verformt ist, der mittels der Spindel und bei auf dem Kugelkopf aufsitzendem Rohrstück bündig zwischen den Anschlägen um die Querstange zur Anlage gebracht werden kann.

Der besondere Vorteil der erfindungsgemäßen Vorrichtung ist darin zu sehen, daß sie mit wenigen Handgriffen auf dem Kugelkopf angebracht werden kann.

Gegen Diebstahl oder unbeabsichtigtes Abheben der Vorrichtung von dem Kugelkopf ist in Weiterbildung der Erfindung in dem Rohrstück eine Bohrung zur Aufnahme eines Sicherungsmittels vorgesehen.

Um zu gewährleisten, daß die am Ende des Flachbandes vorhandene Krümmung sicher um die Stange greift, ist in Weiterbildung der Erfindung zwischen den Stützlaschen einer horizontal verlaufender Stift vorhanden, der das Flachband gegen Verdrehung sichert.

Um die Verwendbarkeit der Vorrichtung erweitern zu können ist in Weiterbildung der Erfindung vorgesehen, daß der Tragarm aus einem Hohlprofil mit drei- oder mehreckigem oder auch rundem Querschnitt besteht
und
entweder durch teleskopartiges Einführen eines oder, aufeinander folgend mehrerer entsprechend niedriger dimensionierter Hohlprofil
oder
durch Aneinandersetzen gleich dimensionierter Hohlprofiie mittels innerhalb oder außerhalb der Hohlprofile geführter Muffen verlängerbar ist.

Es empfiehlt sich, die Hohlprofile gegeneinander in Fahrt- und Gegenrichtung festzulegen.

Die besonderen Vorteile der Weiterbildung der erfindungsgemäßen Vorrichtung sind darin zu sehen, daß dadurch der Tragarm soweit verlängert werden kann, daß zum Beispiel das Reserverad oder die Leiter ungehindert zugänglich gemacht werden können oder die Tür zum Innenraum geöffnet oder ihre freie Benutzung ermöglicht werden kann.

Ein weiterer Vorteil ist darin zu sehen, daß in Weiterbildung der Erfindung auf dem Tragarm oder den der Verlängerung dienenden Hohlprofilen Bauteile zum Tranport verschiedener Lasten stufenlos verschiebbar und arretierbar aufgeschoben oder mit dem Hohlprofil fest verbunden sind. So können in Weiterbildung der Erfindung Bauteile zum Transport von Fahrrädern, Skiern, Segel- oder Surfgeräten oder zum Transport von Packgefäßen auf einzelne Hohlprofilteile aufgesetzt und darauf befestigt werden oder die Hohlprofilteile sind fest mit solchen Bauteilen verbunden und werden wahlweise und nach Bedarf an den Tragarm angesetzt.

Die Figuren zeigen in zum Teil schematischer Darstellung eine Ausführungsform der Erfindung und deren Einzelheiten.

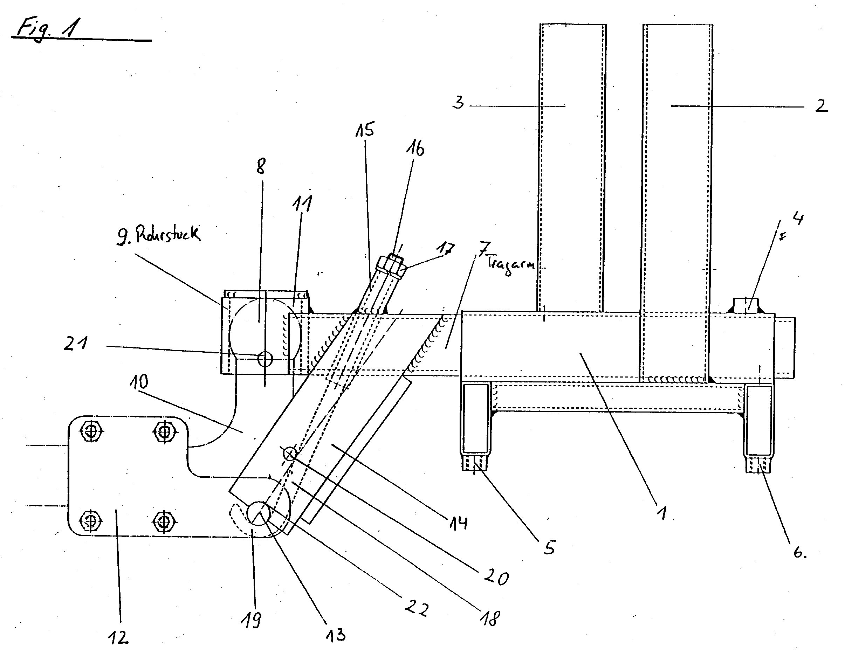

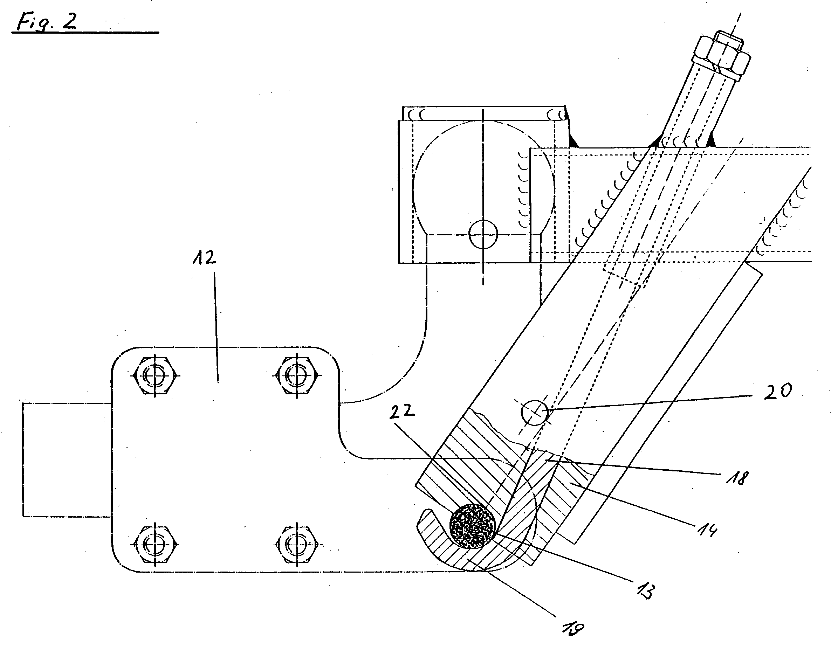

Die Figur 1 und 2 zeigen, wie auf einem Hohlprofil 1 allgemein dargesstellte Bauteile 2 und 3 zum Transport bestimmter Lasten mittels Schrauben 4, 5, und 6 festgelegt sind. Diese Figuren zeigen weiterhin, wie der Tragarm 7 mittels einer Kugekkopfkupplung an dem Fahrzeug angebracht ist. Der Tragarm 7 ist fest mit dem Rohrstück 9 verbunden, das den Kugelkopf 8 in Form einer Kappe übergreift. An der Halterung 10 der Kugelkopfkupplung ist mit Spannstücken 12 fest eine quer zur Fahrtrichtung verlaufende Stange 13 montiert, die zwei Anschläge 22 aufweist. An dem Tragarm 7 ist beiderseits je eine Stützlasche 14 befestigt, die schräg in Fahrtrichtung nach unten weist und an ihrem unteren Ende eine Ausnehmung aufweist mit der sie außerhalb der Anschläge formschlüssig auf der Stange 13 aufliegt sobald der Tragarm 7 in seiner vorgesehenen Stellung liegt. Der feste Sitz des Tragarmes 7 auf dem Kugelkopf 8 wird dadurch gewährleistet, daß an ihm schräg in Fahrtrichtung nach unten weisend eine Hülse 15 angebracht ist, die den Tragarm 7 nach oben überragt. In der Hülse 15 verläuft eine Spindel 16 mit Außengewinde, die durch Betätigung eines am oberen Ende der Hülse 15 befindlichen Handrades 17 mit einem in das Spindelgewinde eingreifende Innengewinde longitudinal gegen die Hülse 15 bewegt werden kann und daß die Spindel 16 an ihrem unteren Ende ein Flachband 18 trägt, das an seinem unteren Ende in Fahrtrichtung zu einem Halbkreis 19 verformt ist, der mittels der Spindel 16 und bei auf dem Kugelkopf 8 aufsitzendem Rohrstück 9 bündig zwischen den Anschlägen 22 um die Stange 13 zur Anlage gebracht werden kann. Um eine richtige Lage des Halbkreises 19 zur Stange 13 zu gewährleisten, ist in der Hülse 15 ein zwischen den Stützlaschen 14 horizontal verlaufender Stift 20 vorhanden, der das Flachband 18 führt und gegen Verdrehung sichert. Endlich kann noch eine Bohrung 21 in dem Rohrstück 9 zum Anbringen einer Sicherung gegen Diebstahl oder unbeabsichtigtes Abheben vorgesehen sein.

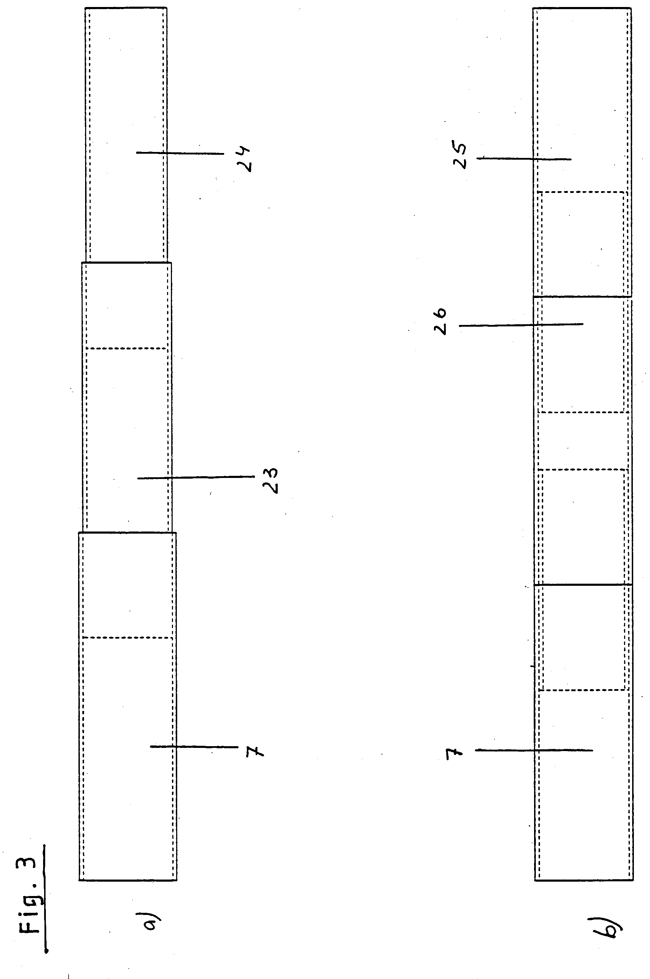

Figur 3 zeigt die beiden erfindungsgemäßen Möglichkeiten, den Tragarm 7 zu verlängern. Gemäß Teilfigur 3a geschieht dies dadurch, daß in den Tragarm 7 teleskopartig entsprechend niedriger dimensionierte Hohlprofile 23 und 24 eingeführt oder ausgezogen werden können. Nach Figur 3b ist an den Tragarm 7 ein profilgleiches Hohlprofil 25 angesetzt, das mit dem Tragarm 7 mittels einer eingeführten Muffe 26 verbunden ist. In beiden Fällen, sind die Einzelteile in Fahrtrichtung und Gegenrichtung gegeneinander festgelegt.

## Patentansprüche

1. Vorrichtung zum Transport von Lasten auf der Rückseite von Kraftfahrzeugen, die mit einer Kugelkopfkupplung versehen sind, mittels eines horizontal gegen die Fahrtrichtung gerichteten Tragarms,
dadurch gekennzeichnet,
daß die Vorrichtung eine Stange (13) enthält, die mit Mitteln zu ihrer Befestigung quer zur Fahrtrichtung auf einer Kugelkopfkupplung (8) versehen ist, wobei die Stange (13) zwei zum Befestigungsmittel symmetrische Anschläge (22) aufweist,
und
daß ein Rohrstück (9) in Form einer den Kugelkopf (8) übergreifenden Kappe (11) an dem Tragarm (7) fest angesetzt ist
und
an dem Tragarm (7) beiderseits je ein schräg in Fahrtrichtung nach unten gerichtete Stützlasche (14) befestigt ist, die an ihrem unteren Ende eine Ausnehmung aufweist mit der die Stützlasche (14) formschlüssig auf der Stange (13) außerhalb der Anschläge (22) aufliegt sobald der Tragarm (7) in seiner vorgesehenen Stellung liegt
und
daß in dem Tragarm (7) in einer schräg in Fahrtrichtung nach unten gerichteten Hülse (15), die den Tragarm (7) überragt, eine Spindel (16) mit Außengewinde verläuft, die durch Betätigung eines am oberen Ende der Hülse (15) befindlichen Handrades (17) mit einem in das Spindelgewinde eingreifende Innengewinde longitudinal gegen die Hülse (15) bewegt werden kann
und
daß die Spindel (16) an ihrem unteren Ende ein Flachband (18) trägt, das an seinem unteren Ende ebenfalls in Fahrtrichtung zu einem Halbkreis (19) verformt ist, der mittels der Spindel (16) und bei auf dem Kugelkopf (8) aufsitzendem Rohrstück (9) bündig zwischen den Anschlägen (22) um die Stange (13) zur Anlage gebracht werden kann.

2. Vorrichtung nach Anspruch 1,
dadurch gekennzeichnet,
daß in dem Rohrstück (9) eine Bohrung (21) zur Aufnahme von Sicherungsmitteln vorhanden ist.

3. Vorrichtung nach Anspruch 1 oder 2,
dadurch gekennzeichnet,
daß zwischen den Stützlaschen (14) ein horizontaler Stift (20) vorhanden ist, der das Flachband (18) gegen Verdrehung sichert.

4. Vorrichtung nach Anspruch 1 oder einem der folgenden
dadurch gekennzeichnet,
daß der Tragarm (7) aus einem Hohlprofil mit drei-oder mehreckigem oder auch rundem Querschnitt besteht
und
entweder durch teleskopartiges Einführen eines oder aufeinander folgend mehrerer entsprechend niedriger dimensionierter Hohlprofile (23, 24)
oder
durch Aneinandersetzen gleich dimensionierter Hohlprofile (7, 25) mittels innerhalb oder außerhalb der Hohlprofile geführter Muffen (26) verlängerbar ist.

5. Vorrichtung nach Anspruch 4,
dadurch gekennzeichnet,
daß die Hohlprofile (7, 23, 24, 25, 26) gegeneinander in Fahrt- und Gegenrichtung festgelegt sind.

6. Vorrichtung nach Anspruch 1 oder einem der folgenden,
dadurch gekennzeichnet,
daß auf dem Tragarm (7) oder den der Verlängerung dienenden Hohlprofilen (23, 24, 25) Bauteile (2, 3) zum Transport verschiedener Lasten
stufenweise verschiebbar und arretierbar aufgeschoben oder mit den Hohlprofielen (7, 23, 24, 25) fest verbunden sind.

7. Vorrichtung nach Anspruch 6,
dadurch gekennzeichnet,
daß die Bauteile (2, 3) zum Transport von Fahrrädern, Skiern, Segel- oder Surfgeräten oder zum Transport von Packgefäßen ausgebildet sind.

## Claims

1. Arrangement for transporting loads on the rear side of motor vehicles which are provided with a ball coupling, by means of a carrying arm which is directed horizontally counter to the direction of travel, characterized in that the arrangement contains a bar (13) which is provided with means for fastening it, transversely with respect to the direction of travel, on a ball coupling (8), the bar (13) exhibiting two stops (22) which are symmetrical with respect to the fastening means, and in that a tube piece (9) in the form of a cap (11) which engages over the ball head (8) is attached fixedly on the carrying arm (7), and there is fastened on both sides of the carrying arm (7) in each case a supporting plate (14) which is directed obliquely downwards in the direction of travel and, at its lower end, exhibits a cutout by means of which the supporting plate (14) bears in a positively locking manner on the bar (13) outside the stop (22) as soon as the carrying arm (7) is located in its envisaged position, and in that a spindle (16) with an external thread runs in the carrying arm (7) in a sleeve (15) which is directed obliquely downwards in the direction of travel and projects beyond the carrying arm (7), which spindle, by the actuation of a handwheel (17) which is located at the upper end of the sleeve (15) and has an internal thread engaging into the spindle thread, can be moved longitudinally with respect to the sleeve (15), and in that, at its lower end, the spindle (16) bears a flat band (18) which, at its lower end, is deformed in the manner of a semicircle (19), likewise in the direction of travel, which, by means of the spindle (16) and when the tube piece (9) is seated on the ball head (8), can be brought to bear around the bar (13) flush between the stops (22).

2. Arrangement according to Claim 1, characterized in that a bore (21) for receiving securing means is provided in the tube piece (9).

3. Arrangement according to Claim 1 or 2, characterized in that a horizontal pin (20) which secures the flat band (18) against rotation is provided between the supporting plates (14).

4. Arrangement according to Claim 1 or one of the following claims, characterized in that the carrying arm (7) comprises a hollow profile with a cross-section which has three or more sides or is even round, and it can be extended either by the telescopic guidance of one or of a number of hollow profiles (23, 24) following one after the other and being of correspondingly smaller dimensions or by identically dimensioned hollow profiles (7, 25) being fitted together by means of sockets (26) provided inside or outside the hollow profiles.

5. Arrangement according to Claim 4, characterized in that the hollow profiles (7, 23, 24, 25, 26) are fixed with respect to one another in the direction of travel and in the direction counter to this.

6. Arrangement according to Claim 1 or one of the following claims, characterized in that components (2, 3) for transporting various loads are pushed on the carrying arm (7), or the hollow profiles (23, 24, 25) serving for extension purposes, such that they can be displaced in a stepwise manner and arrested or they are connected fixedly to the hollow profiles (7, 23, 24, 25).

7. Arrangement according to Claim 6, characterized in that components (2, 3) are designed for transporting bicycles, skis, sailing or surfing equipment or for transporting packaging containers.

## Revendications

1. Dispositif pour transporter des charges sur la face arrière d'un véhicule équipé d'un accouplement à boule, au moyen d'un bras porteur horizontal orienté selon la direction de déplacement du véhicule, caractérisé en ce que:
- le dispositiv comprend une barre (13) équippée de moyens permettant de la fixer sur l'accouplement à boule (8), transversalement à la direction de déplacement du véhicule, cette barre (13) portant deux butées (22) symétriques par rapport aux moyens de fixation,
- le bras porteur (7) est solidaire d'une pièce tubulaire (9) en forme de capot (11) emboîté sur la boule (9) de l'accouplement,
- sur le bras porteur (7) sont fixées, de part et d'autre deux pattes d'appui (14) en pente descendante dans la direction de déplacement du véhicule et dont chacune présente à son extrémité inférieure une encoche par laquelle la patte repose, avec combinaison de formes, sur la barre (13), en dehors des butées (22), lorsque le bras porteur (7) occupe la position prévue,
- le bras porteur (7) est équipé d'une douille (15) en pente descendante dans la direction de déplacement du véhicule, qui dépasse par raport au bras et dans laquelle peut se déplacer une broche (16) filetée extérieurement, le déplacement de la broche par rapport à la douille étant assuré par un volant situé à l'extrémité supérieure de la douille (15) et en prise, par un filetage intérieur, avec la broche (16),
- la broche (16) porte, à son extrémité inférieure, un fer plat (18) dont l'extrémité inférieure est formée en un demi-cercle (19) qui, par l'action de la broche (16), la pièce tubulaire (9) étant en appui sur la boule (9), peut être amenée en appui sur la barre (13), entre les butées (22) et au rass de celles-ci.

2. Dispositif selon la revendication 1, caractérisé en ce que la pièce tubulaire (9) est percèe d'un trou (21) pouvant recevoir des moyens de sécurité.

3. Dispositif selon la revendication 1 ou 2, charactérisé en ce qu'il est prévue, entre les pattes dáppui (14), une broche horizontele (20) empêchant le fer plat (18) de tourner.

4. Dispositif selon la revendication 1 ou l'une des suivants, charactérisé en ce que:
- le bras porteur (7) est fait de profilés creux à section en polygone à au moins trois côtés, ou à section circulaire,
- la bras porteur est constitué doit de plusieurs profilés creux (23, 24) successifs, à sections décroissantes, montés télescopiquement, soit de profilés creux (7, 25) de même section pouvant être mis bout à bout par l'intermédiaire de manchons internes ou externes (26).

5. Dispositif selon la revendication 4, caractérisé en ce que les profilés creux (7, 23, 24, 25, 26) sont fixés les uns aux les autres, selon la direction de déplacement du véhicule, dans les deux sens.

6. Dispositif selon la la revendication 1 ou l'une des suivants, caracterisé en ce que sur le bras porteur (7) ou sur les profilés creux (23, 24, 25) le prolongeant, sont montés des éléments (2, 3) pour transporter diverses charges, ces éléments pouvant coulisser par étapes sur les profils creux (7, 23, 24, 25).

7. Dispositif selon la revendication 6, caractérisé en ce que les éléments (2, 3) sont conçus pour transporter des roues de secours, des skis, des planches à voile ou de surf, ou pour transporter des conteneurs.
